# EUROPEAN PATENT SPECIFICATION

(11) **EP 0 341 670 B1**
(45) Date of publication and mention of the grant of the patent: **24.07.1996**
(21) Application number: 89108338.8
(22) Date of filing: 09.05.1989
(51) Int. Cl.: G06F 13/18, G06F 15/16

(54) **Processing time allocation system and method**
Verarbeitungszeitzuordnungssystem und -verfahren
Système et méthode d'allocation du temps de traitement

(30) Priority: 10.05.1988 JP 114250/88
(43) Date of publication of application: 15.11.1989
(73) Proprietor: SHARP KABUSHIKI KAISHA, Osaka 545 (JP)
(72) Inventor: Sakamoto, Tatsuhiko, Yamatokoriyama-shi Nara-ken (JP); Kiyohara, Toshimi, Nara-shi Nara-ken (JP)
(74) Representative: TER MEER - MÜLLER - STEINMEISTER & PARTNER

(56) References cited:
- EP-A- 0 280 369
- US-A- 4 237 543

## Description

### BACKGROUND OF THE INVENTION

### 1. Field of the Invention

The present invention relates to a device having a plurality of CPUs with a single memory shared by the CPUs and, more particularly, to a processing time allocation system and method using a memory unit in common.

### 2. Description of the Prior Art

There have been conventionally proposed two primary methods for allocating the memory process time for the plurality of CPUs, which methods are: (1) time-sharing method; and (2) first-in first-out (FIFO) method. These two methods are described in detail below.

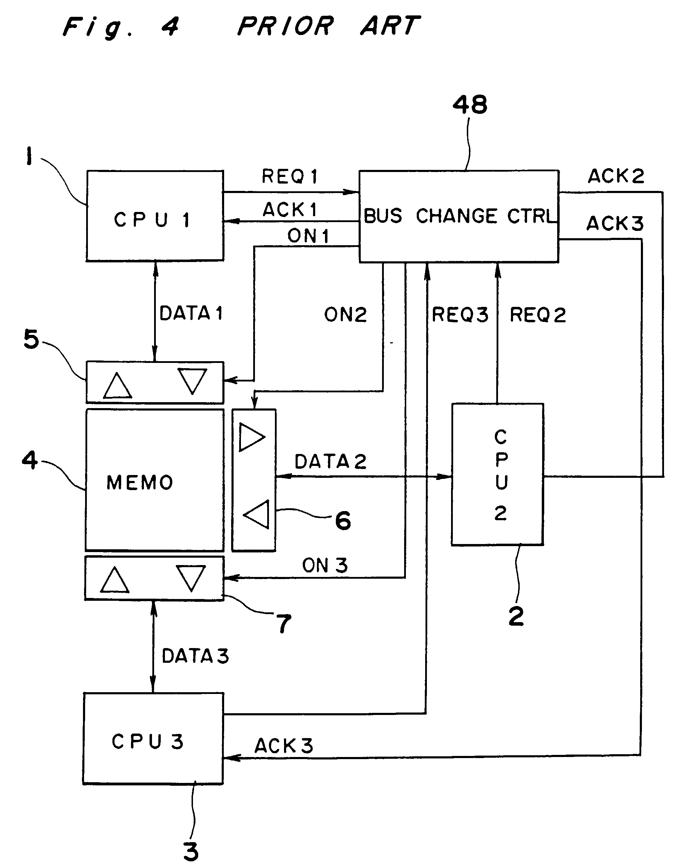

Fig. 4 is a block diagram of a device including one memory unit 4 and three CPUs 1, 2 and 3 which share the memory unit 4 such that the memory unit 4 is accessed by individual CPUs 1, 2 and 3. Bus change controller 48 determines which one of CPUs 1, 2 and 3 is permitted to access to memory 4.

Signals indicated by REQ1, REQ2 and REQ3 are the access request signals produced from CPUs 1, 2 and 3, respectively, to memory 4. Signals indicated by ON1, ON2 and ON3 are bus occupying signals for enabling and disabling the bus structures between memory 4 and each of CPUs 1, 2 and 3. Signals indicated by ACK1, ACK2 and ACK3 are signals which acknowledge completion of the processing requested by CPUs 1, 2 and 3, respectively.

When access to memory 4 is required by CPUs 1, 2 or 3, that CPU requesting access activates or generates corresponding request signal REQ1, REQ2 or REQ3 to bus change controller 48. Request signal REQ1, REQ2 or REQ3 is maintained active until the requested processing is completed. Based on the active or inactive status of REQ1, REQ2 and REQ3 and the current status of memory 4, bus change controller 48 selects one access request REQ1, REQ2 or REQ3, and activates a corresponding bus occupying signal ON1, ON2 or ON3 by which the corresponding bus structure is enabled for the selected CPU. When processing using the memory 4 is completed, bus change controller 48 makes the activated bus occupying signal ON1, ON2 or ON3 inactive, and notifies the selected CPU that the processing is completed by sending the signal ACK1, ACK2 or ACK3.

Bus buffer 5, 6 or 7 is enabled when the corresponding bus occupying signal ON1, ON2 or ON3 is activated so that data can be transmitted through the corresponding bus structure between the memory 4 and the selected CPU.

For the above described arrangement, the allocation of the memory process time can be done by either one of the two primary methods as explained below.

### (1) Process time allocation by time-sharing method

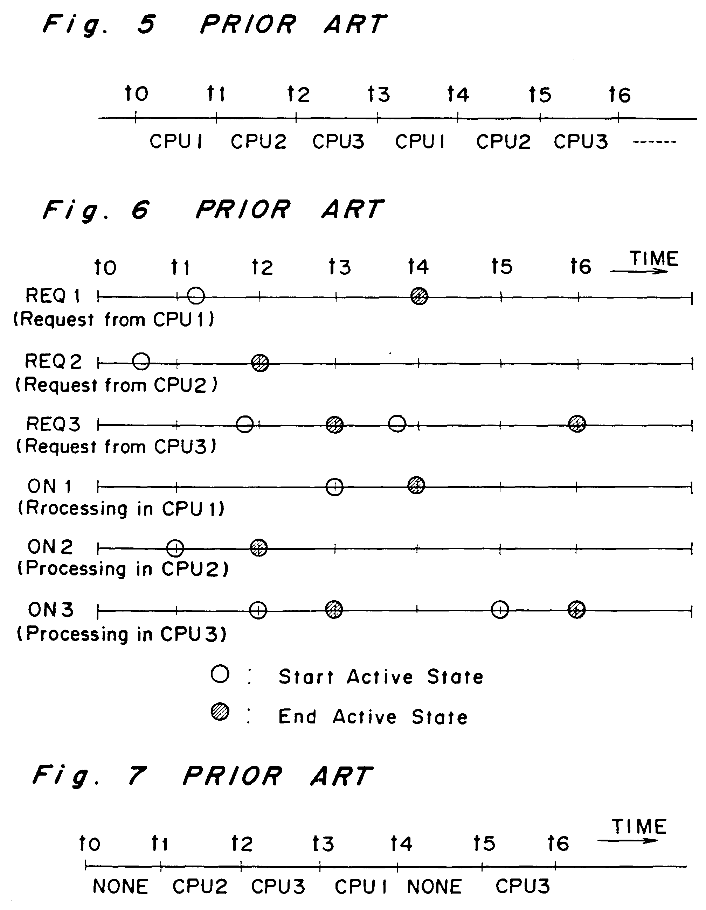

In this method, the access and process time of CPUs 1, 2, 3 is allocated based on a predetermined time-sharing time basis. Specifically, access and process time is divided into time slots at time points t0, t1, t2 and so on to tn, as shown in Fig. 5, and the time slots are allocated to CPUs 1, 2 and 3 in turn repeatedly for the access and processing. Thus, for CPU 1, access is enabled for the period from t0 to t1 and from t3 to t4. Similarly, access for CPU 2 is enabled from t1 to t2, and t4 to t5, and for CPU 3 from t2 to t3 and from t5 to t6. In this case, processing does not occur during any given time period unless there has been a prior access request from the CPU assigned for processing during that period, and there will, therefore, be periods in which memory 4 is not accessed. Thus, there will be a number of dead periods in which no access and processing is effected.

What occurs when, for example, access request signals REQ1, REQ2 and REQ3 are received from CPUs 1, 2 and 3, respectively, as shown in Fig. 6 is described below. In Fig. 6, a blank circle indicates the time when the access request signal REQ1, REQ2 or REQ3 or bus occupying signal ON1, ON2 or ON3 is turned to the active state, and a shaded circle indicates the time when the same is turned to inactive state. Under the time-sharing method, bus occupying signals ON1, ON2 and ON3 change between the active and inactive states, as shown in Fig. 6.

For example, CPU 1 generates or activates access request REQ1 between times t1 and t2, but because the next access enable time starts at time t3, processing is delayed and does not actually begin until time t3. In this case, the processing ends at time t4.

Likewise, CPU 2 generated an access request REQ2 between times t0 and t1, and processing thus began at time t1. CPU 3 generated an access request REQ3 between times t1 and t2 and also between times t3 and t4, and processing thus began at time points t2 and t5. Actual utilization of memory 4 is therefore as shown in Fig. 7.

### (2) Process time allocation by first-in first-out (FIFO) method

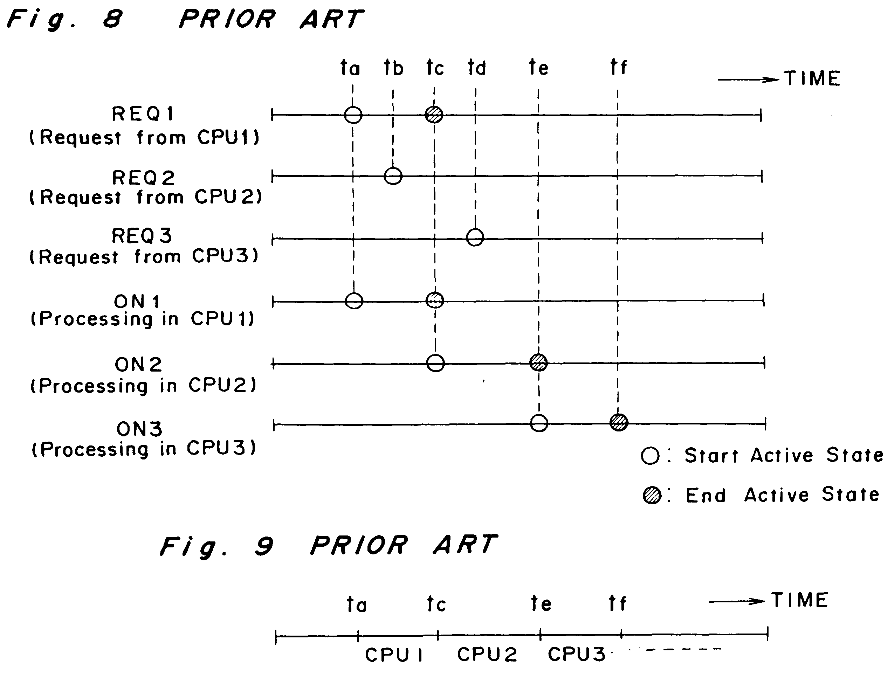

This method enables access in the order in which an access request is received from any of CPUs 1, 2, 3. Therefore, the status of process time and bus occupying signal ON1, ON2 or ON3 when access request signal REQ1, REQ2 or REQ3 is received from each CPU are as shown in Fig. 8. CPU 1 generated an access request REQ1 at time ta. Because there was no processing by any of the other CPUs at that time, the request from CPU 1 is immediately accepted. CPU 2 generates an access request REQ2 at time tb, but because the request from CPU 1 is already being processed, the request from CPU 2 could not be immediately handled and access is delayed until CPU 1 completes the processing, i.e., in Fig. 8 at time tc. A similar situation occurs with CPU 3 by which the access request REQ3 is generated at time td, but because of CPU 2 processing, CPU 3 access and processing is delayed until time te, that is when CPU 2 processing completes.

Actual utilization of memory 4 is therefore as shown in Fig. 9.

However, the two process time control methods (1) and (2) described above has the following problems, respectively.

Specifically, in time sharing method (1), it is possible that a waiting time may be undesirably prolonged for the CPUs requesting the process, even though the memory is not currently being used by another CPU. This is because each CPU is previously assigned to a given memory access time slot. This results in a significant decrease in memory utilization and CPU efficiency and performance.

On the other hand, according to FIFO method (2), there is no way to accommodate CPUs which must be processed immediately with no or very short waiting time when the memory is being occupied by other CPU.

### SUMMARY OF THE INVENTION

The present invention has been developed with a view to substantially solving the above described disadvantages and has for its essential object to provide an improved processing time allocation method using a memory unit in common by which it is possible to eliminate or minimize the waiting time before the start of the CPU processing.

Therefore, the object of the present invention is to provide an improved process time allocation system and method which allocates processing time in such a manner as to enable priority access and allocation of memory for a CPU which does not allow for a standby state so that a standby state does not occur, and which moreover minimizes the waiting time for the other CPUs.

To accomplish the above object a processing time allocation system comprising:
a memory , the access to said memory being shared by a plurality of CPUs, wherein at least a first CPU is connected to said memory and generating a first access request signal when an access to said memory is required by said first CPU, and a second CPU is connected to said memory and generating a second access request signal when access to said memory is required by said second CPU; and
an access control means is provided for receiving said first and second request signals so as to control the time allocation of said access between said plurality of CPUs and said memory.
is characterized in that said second CPU before generating said second access request signal generates a prohibit signal for a predetermined time which is longer than any processing between said first CPU and said memory and thereafter generates said second access request signal and said access control means additionally receives said prohibit signal for controlling said access between said first CPU and said memory and between said second CPU and said memory in a modified first-in first-out scheme such that during the generation of said prohibit signal no access between said first CPU and said memory is initiated and, when said prohibit signal terminates, said second request signal is activated to enable access between said second CPU and said memory ( claim 1).

Depending claims 2 and 3 are specifying advantageous developments thereof.

Further, the above mentioned object is solved by a process time allocation method for use A process time allocation method for use in a device provided with a memory and a plurality of CPUs which are accessible to said memory one at a time and an access control means for allocating a processing time between a selected CPU and said memory , which is characterized in that one CPU has a priority access to said memory and said process time allocation method comprises the step of:
detecting whether or not an access demand is produced from said CPU having the priority access;
generating a prohibit signal when said access demand from said CPU having the priority access is detected;
counting a predetermined period of time for generating said prohibit signal;
preventing any initiation of access to said memory by any CPUs during said prohibit signal is present; and
effecting an access between said CPU having the priority access and said memory when said prohibit signal terminates. (claim 4)

The process time allocation method according to the present invention provides a CPU which can process its assigned tasks immediately without a standby state by sending a prohibit signal which prohibits processing by other CPUs to a bus change controller.

In a process time control method according to the present invention, when there is an access request from a CPU which is enabled for immediate processing, processing by said CPU is executed immediately by prohibiting access to memory and processing by other CPUs by means of said prohibition signal, and when there is an access request from another CPU, these requests are processed on the modified FIFO basis.

### BRIEF DESCRIPTION OF THE DRAWINGS

These and other objects and features of the present invention will become apparent from the following description taken in conjunction with preferred embodiments thereof with reference to the accompanying drawings, throughout which like parts are designated by like reference numerals, and in which:
Fig. 1 is a block diagram of a processing time allocation system according to a first embodiment of the present invention;
Fig. 2 is a time chart showing an operation of the system shown in Fig. 1;
Fig. 3 is a block diagram of a processing time allocation system according to a second embodiment according to the present invention;
Fig. 4 is a block diagram of a processing time allocation system according to prior art;
Figs. 5, 6 and 7 are time charts showing operation of process time allocation under the time-sharing method according to prior art; and
Figs. 8 and 9 are time charts showing operation of process time allocation under the FIFO method according to prior art.

### DETAILED DESCRIPTION OF THE PREFERRED EMBODIMENTS

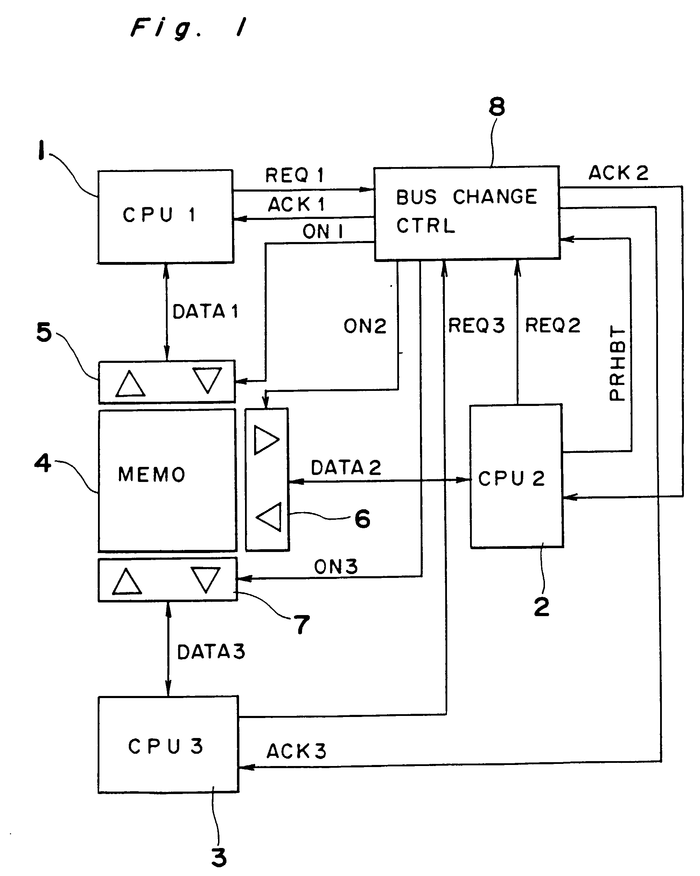

Referring to Fig. 1, a block diagram of a processing time allocation system according to a first embodiment of the present invention is shown.

Three CPUs 1, 2 and 3 are provided which are arranged to exchange data DATA1, DATA2, DATA3, respectively, one at a time, with a common memory 4 through suitable buffers 5, 6 and 7.

When CPU 1 demands a data exchange with memory 4, it generates or activates access request signal REQ1 to a bus change control 8 which generates a bus occupying signal ON1, if other two bus occupying signals ON2 and ON3, for CPUs 2 and 3 respectively, are not being generated.

In this case, if any of the two other bus occupying signals, such as ON3, is generated or activated, the access request signal REQ1 is added in bus change control 8 as bus request queue. Thereafter, when the bus occupying signal ON3 becomes inactive, a request signal, such as REQ1, in the next bus request queue is taken up, whereby a corresponding bus occupying signal ON1 is provided from bus change control 8 to buffer 5 and, at the same time, an acknowledge pulse ACK1 is transmitted from bus change control 8 to CPU 1. Thus, in response to acknowledge pulse ACK1, CPU 1 starts to exchange data with memory 4. In the meantime, CPU 1 continues to produce access request signal REQ1 to bus change control 8, and bus change control 8 continues to produce bus occupying signal ON1.

When the data exchange between CPU 1 and memory 4 completes, CPU 1 makes access request signal REQ1 inactive, and in turn, bus change control 8 makes bus occupying signal ON1 inactive. Thus, bus change control 8 is ready to take up the next bus request queue. In this manner, bus change control 8 takes a modified FIFO method.

Thus, with respect to CPU 1, bus change control 8 receives access request signal REQ1, and generates or activates acknowledge pulse ACK1 when CPU 1 can have an access to memory 4, and also generates or activates bus occupying signal ON1 during the data exchange between CPU 1 and memory 4, i.e., unit access request signal REQ1 becomes inactive.

Similarly, with respect to CPU 3, bus change control 8 receives access request signal REQ3, and generates or activates acknowledge pulse ACK3 when CPU 3 can have an access to memory 4, and also generates or activates bus occupying signal ON3 during the data exchange between CPU 3 and memory 4, i.e., unit access request signal REQ3 becomes inactive.

It is to be noted that according to the embodiment shown in Fig. 1, CPU 2 has a priority such that the processing as requested by CPU 2 must be carried out without any waiting time. That is, whenever access request signal REQ2 is generated or activated, bus change control 8 must permit data exchange between CPU 2 and memory 4 immediately, without interrupting other CPUs data exchange with memory 4. To this end, CPU 2 generates a prohibit signal PRHBT a predetermined period of time Tx prior to the generation or activation of access request signal REQ2. The predetermined time Tx is selected to have a time length which is slightly longer that the longest processing time which may be requested by CPU 1 or CPU 3. Such a time Tx can be preselected by considering all the programs stored in CPU 1 and CPU 3.

Other structure of CPU 2 is the same as other CPUs such that bus change control 8 receives access request signal REQ2, and generates or activates acknowledge pulse ACK3 when CPU 3 can have an access to memory 4, and also generates or activates bus occupying signal ON3 during the data exchange between CPU 3 and memory 4, i.e., unit access request signal REQ3 becomes inactive.

During the generation of prohibit signal PRHBT for time Tx, every access request signals REQ1 and REQ3 applied to bus change control 8 are not activated, but are added to bus request queue, even if memory 4 is free from any CPUs. If any access request signal is being activated prior to the generation of the prohibit signal PRHBT, such an access request signal will be made inactive during the generation of prohibit signal PRHBT, because no processing is longer than time Tx. At the end of prohibit signal PRHBT, CPU 2 generates access request signal REQ2 which is immediately accepted by bus change control 8. Thus, in response to the generation of access request signal REQ2, bus change control 8 generates bus occupying signal ON2 to immediately permit the data exchange between CPU 2 and memory 4. When the data exchange between CPU 2 and memory 4 completes, access request signal REQ2 is made inactive and, in turn, bus occupying signal ON2 is made inactive. Thereafter, bus change control 8 takes up the next access request signal which is the first one listed in the bus request queue.

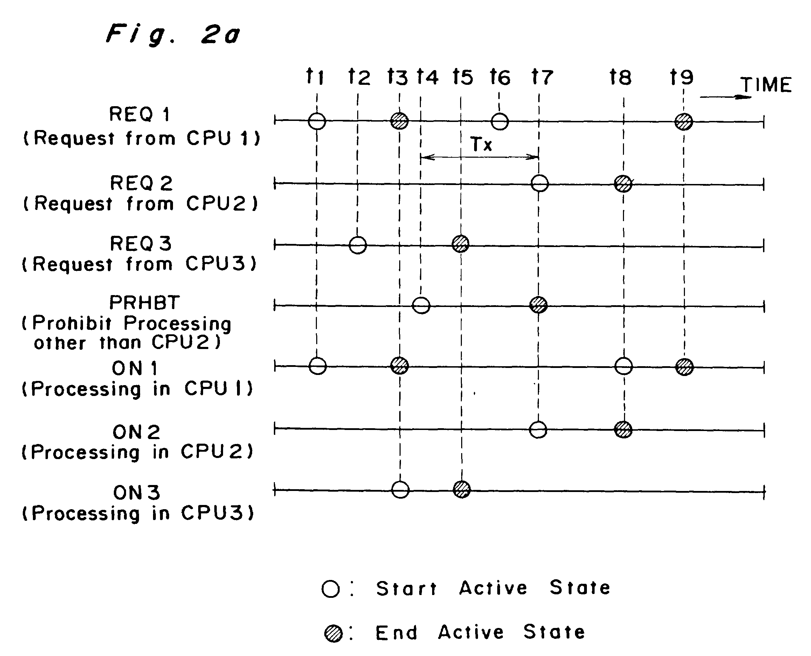

Next, the operation of the processing time allocation system described above will be explained in connection with Fig. 2a.

The process time control method according to the present invention is described below.

In Fig. 2, a blank circle indicates the beginning of an active signal state, and a shaded circle indicates the end of the active signal state.

It is assumed that before time t1, memory 4 is in a free condition from any CPUs 1, 2 and 3. At time t1, CPU 1 generates access request signal REQ1 which is immediately accepted by bus change control 8 so that control 8 produces a bus occupying signal ON1 at time t1. At time t2, CPU 3 generates access request signal REQ3 which is added to the bus request queue in bus change control 8. At time t3, when the data exchange processing between CPU 1 and memory 4 completes, CPU 1 terminates the generation of REQ1 so that bus change control 8 makes bus occupying signal ON1 inactive, and generates acknowledge signal ACK3 to CPU 3 and, at the same time, generates bus occupying signal ON3 in compliance with the access request signal REQ3 in the bus request queue. Thus, in response to the acknowledge signal ACK3, CPU 3 starts the data exchange processing with memory 4.

In the meantime, at time t4, CPU 2 generates a prohibit signal PRHBT which continues for the time period Tx. In this time period Tx, any processing carried out by CPU 1 or CPU 3 will be terminated, and no processing will be initiated. Thus, the data exchange processing between CPU 3 and memory 4 will be terminated at time t5, and a new access request signal REQ1 at time t6 is added to bus request queue. At time t7, when the prohibit signal PRHBT is made inactive, CUP 2 generates access request signal REQ2 which is immediately accepted without any standby state. Thus, bus occupying signal ON2 is generated until the data exchange by CPU 2 terminates, i.e., at time t8. Then, the access request signal REQ1 is taken up to effect the data exchange between CPU 1 and memory 4 which continues until time t9.

The operation carried out in CPU 2 is shown in Fig. 2b, in which access demand from CPU 2 is detected at step #1, and if such a demand is present, prohibit signal PRHBT is generated at step #2. Then, time Tx is counted at step #3 and at the end of time Tx, prohibit signal PRHBT terminates and, at the same time, access request signal REQ2 is generated (step #4).

According to the above described embodiment, with respect to CPU 2, processing is executed without a standby state, and the process standby state required for the other CPUs (CPU 1 and CPU 3) is minimized.

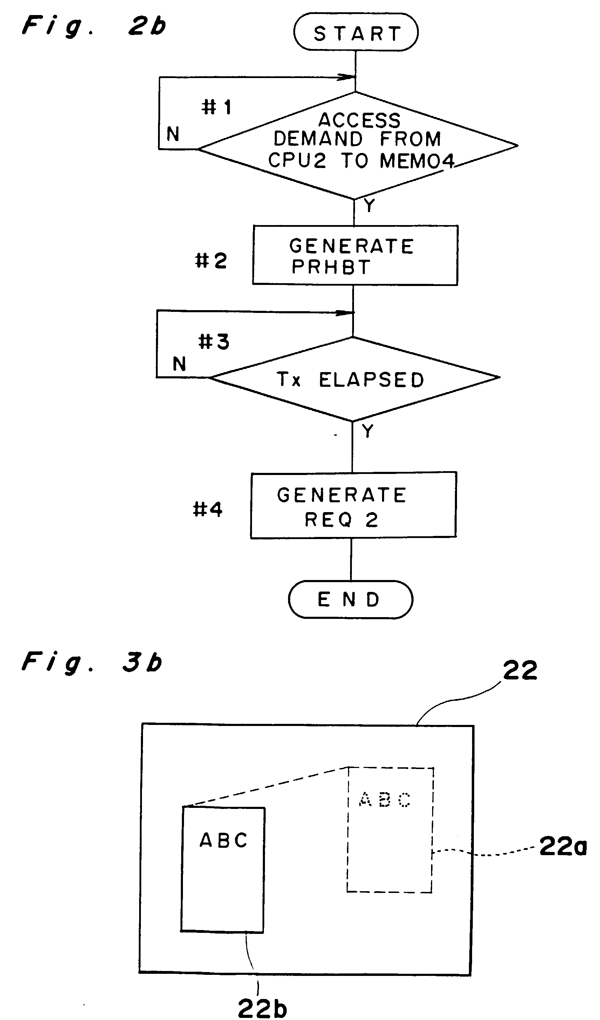

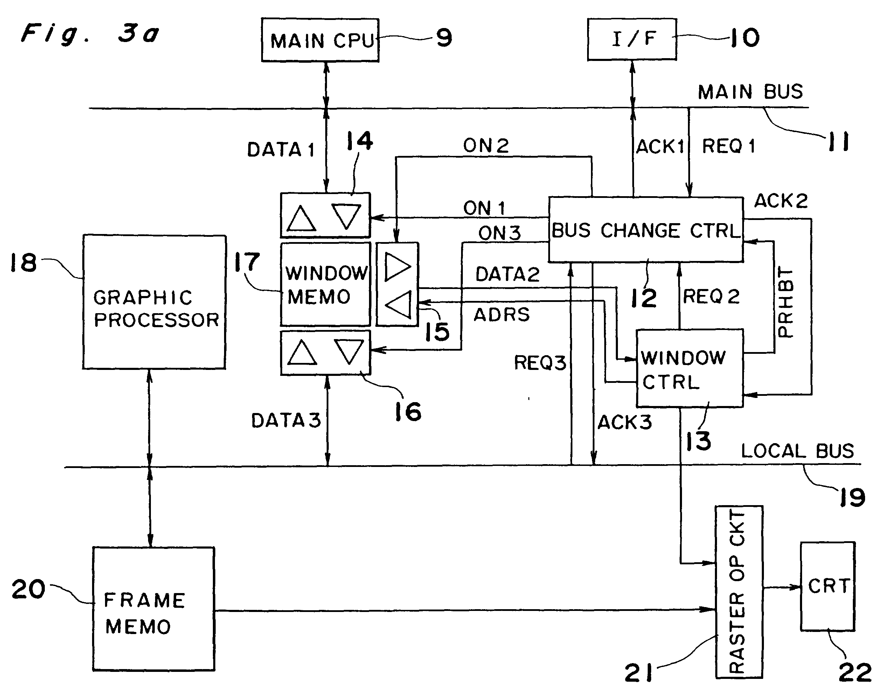

A second embodiment of the present invention is shown in Fig. 3. In this embodiment, window memory 17 corresponds to the shared memory 4, and window memory 17 can be accessed by main CPU 9, window controller 13, and graphic processor 18.

In the second embodiment, main CPU 9, window controller 13, and graphic processor 18 correspond to CPUs 1, 2 and 3, respectively. It is to be noted that window controller 13 does not write data to window memory 17, and only reads data from memory. Access by main CPU 9 and graphic processor 18 to window memory 17 occurs over main bus 11 and local bus 19, respectively.

In the second embodiment, window controller 13 has a priority such that the processing as requested by window controller 13 must be carried out without any waiting time. That is, whenever access request signal REQ2 is generated or activated, bus change control 12 must permit data exchange between window controller 13 and window memory 17 immediately, without interrupting other CPU 9 or 18 data exchange with memory 4. To this end, window controller 13 generates a prohibit signal PRHBT a predetermined period of time Tx prior to the generation or activation of access request signal REQ2.

Main CPU 9 writes data input from an exterior device through interface circuit 14 to window memory 17, and reads data from window memory 17 for output to an external device through interface circuit 14.

Graphics processor 18 functions to input/output data between window memory 17 and frame memory 20.

Window controller 13 functions to output data read from window memory 17 according to the scanning of CRT 22 through interface circuit 15 and output this data to sequential raster operation circuit 21 to enable the positioning and display of windows on CRT 22.

Sequential raster operation circuit 21 performs a logic operation on the data output from frame memory 20 and from window controller 13, and outputs to CRT 22.

When one or more windows are displayed on CRT 22, window memory 17 stores the window data, and data corresponding to the CRT display data is stored in frame memory 20. Data stored in frame memory 20 is sequentially output according to the scanning of CRT 22 to display the data at the corresponding position on CRT 22.

Using this construction, a multiple window display can be controlled on CRT 22 as described below.

The data for a window is output from window memory 17 through window controller 13 to sequential raster operation circuit 21. At this time, the data for the window is not stored in frame memory 20 and data for another window is output to sequential raster operation circuit 21.

By performing a logical operation on the data output from these two sources using sequential raster operation circuit 21 and outputting the result to CRT 22, a multiple window display on CRT 22 is possible.

When movement of the window or scrolling is completed, data for another window is transferred from window memory 17 to frame memory 20. Then, because the data to be displayed on CRT 22 is stored in frame memory 20, the stored data is output directly to CRT 22 when transfer is completed.

For example, when it is requested to move a window at position 22a shown by dotted line in Fig. 3b to position 22b shown by solid line, such a request should be carried out immediately. In this case, window controller 13 first generates prohibit signal PRHBT so as to prevent main CPU 9 or graphic processor 18 to start a new processing. When the prohibit signal PRHBT is terminated, window control 13 generates access request signal REQ2 and, in turn, bus change control 12 generates a bus occupying signal ON2, thereby enabling data transmission between window controller 13 and window memory 17. First the window controller 13 provides an address signal ADRS(P1) representing a particular point P1 on CRT at which the corner of the window is aligned. By this address signal ADRS(P1), window memory transmits a full screen image data with the window's corner located at P1. Then, window controller 13 provides second address signal ADRS(P2) at which the corner of the window for the second full screen image is aligned. In this manner, window controller 13 sequentially transmits address signals ADRS(P3), ..., ADRS(Pn), and window memory 17 sequentially transmits a number of full screen image data with the window position slightly changed after each screen. Thus, during the processing of window control 13, the window on the screen is immediately and slidingly shifted. Thus, high speed editing and revisions are possible on CRT 22 because there is no need to transfer the data to the frame memory 20 each time prior to display on the CRT.

In this manner, the processing time allocation method according to the present invention can be applied for multiple window control on a CRT 22.

As will be understood to those skilled in the art from the above description of the present invention, a process time control method according to the present invention enables processing by a number of CPUs which do not allow for a standby period and enables processing by the other CPUs with a minimal waiting period in a device provided with a shared memory, multiple CPUs which are able to access the memory, and a bus change controller which determines which CPU is able to access the memory. High speed editing is enabled by applying this method to the control of a multiple window display.

## Claims

1. A processing time allocation system comprising:
a memory (4), the access to said memory (4) being shared by a plurality of CPUs (1, 2, 3), wherein at least a first CPU (1) is connected to said memory (4) and generating a first access request signal (REQ1) when an access to said memory (4) is required by said first CPU (1), and a second CPU (2) is connected to said memory (4) and generating a second access request signal (REQ2) when access to said memory (4) is required by said second CPU (2); and
an access control means (8) is provided for receiving said first and second request signals (REQ1, REQ2) so as to control the time allocation of said access between said plurality of CPUs (1.2.3) and said memory (4),
**characterized in that** said second CPU (2) before generating said second access request signal (REQ2) generates a prohibit signal (PRHBT) for a predetermined time (Tx) which is longer than any processing between said first CPU (1) and said memory (4) and thereafter generates said second access request signal (REQ2), and said access control means (8) additionally receives said prohibit signal (PRHBT) for controlling said access between said first CPU (1) and said memory (4) and between said second CPU (2) and said memory (4) in a modified first-in first-out scheme such that during the generation of said prohibit signal (PRHBT) no access between said first CPU (1) and said memory (4) is initiated and, when said prohibit signal (PRHBT) terminates, said second request signal (REQ2) is activated to enable access between said second CPU (2) and said memory (4).

2. The processing time allocation system in accordance with claim 1, **characterized by** further comprising:
a third CPU (3) connected to said memory (4) and generating a third access request signal (REQ3) when an access to said memory (4) is required by said third CPU (3), wherein
said second CPU (2) is generating said prohibit signal (PRHBT) for a predetermined time (Tx) which is longer than any processing between said first CPU (1) and said memory (4) and between said third CPU (3) and said memory (4), and
said access control means (8) is additionally receiving said third request signal (REQ3) so as to control the time allocation of said access between said plurality of CPUs (1,2,3) and said memory (4) in a modified first-in first-out scheme such that during the generation of said prohibit signal (PRHBT) no access between said first CPU (1) and said memory (4) and between said third CPU (3) and said memory (4) is initiated and, when said prohibit signal (PRHBT) terminated, said second request signal (REQ2) is activated to enable access between said second CPU (2) and said memory (4).

3. A process time allocation system as claimed in claim 2, wherein said access control means (8) is a bus change control.

4. A process time allocation method for use in a device provided with a memory (4) and a plurality of CPUs (1, 2, 3) which are accessible to said memory one at a time and an access control means (8) for allocating a processing time between a selected CPU and said memory (4), **characterized in that** one CPU has a priority access to said memory and said process time allocation method comprises the step of:
detecting (step #1) whether or not an access demand is produced from said CPU having the priority access;
generating (step #2) a prohibit signal (PRHBT) when said access demand from said CPU having the priority access is detected;
counting (step #3) a predetermined period of time for generating said prohibit signal (PRHBT);
preventing any initiation of access to said memory by any CPUs during said prohibit signal (PRHBT) is present; and
effecting (step #4) an access between said CPU having the priority access and said memory when said prohibit signal (PRHBT) terminates.

## Patentansprüche

1. Verarbeitungszeitzuordnungssystem mit
- einem Speicher (4), wobei der Zugriff auf den Speicher (4) auf eine Anzahl von CPUs (1, 2, 3) aufgeteilt ist, bei dem wenigstens eine erste CPU (1) mit dem Speicher (4) verbunden ist und ein erstes Zugriffsanforderungs-Signal (REQ1) erzeugt, wenn ein Zugriff zu dem Speicher (4) von der ersten CPU (1) gewünscht wird, und bei dem eine zweite CPU (2) mit dem Speicher (4) verbunden ist und ein zweites Zugriffsanforderungs-Signal (REQ2) erzeugt, wenn ein Zugriff zu dem Speicher (4) von der zweiten CPU (2) gewünscht wird; und
- einer Zugriffssteuerungseinrichtung (8), die zum Empfang des ersten und zweiten Zugriffsanforderungs-Signals (REQ1, REQ2) vorgesehen ist, um die Zeitzuordnung des Zugriffs zwischen der Anzahl von CPUs (1, 2, 3) und dem Speicher (4) zu steuern, **dadurch gekennzeichnet**, daß die zweite CPU (2) vor der Erzeugung des zweiten Zugriffsanforderungs-Signals (REQ2) ein Unterdrückungssignal (PRHBT) für eine vorgegebene Zeit (Tx) erzeugt, die länger ist als irgend ein Vorgang zwischen der ersten CPU (1) und dem Speicher (4), und danach das zweite Zugriffsanforderungs-Signal (REQ2) erzeugt, und daß die Zugriffssteuerungseinrichtung (8) zusätzlich das Unterdrückungssignal (PRHBT) empfängt zur Steuerung des Zugriffs zwischen der ersten CPU (1) und dem Speicher (4) und zwischen der zweiten CPU (2) und dem Speicher (4) in einem modifizierten First-in/First-out-Schema, so daß während der Erzeugung des Unterdrückungssignals (PRHBT) kein Zugriff zwischen der ersten CPU (1) und dem Speicher (4) initiiert wird, und wenn das Unterdrückungssignal (PRHBT) endet, wird das zweite Zugriffsanforderungs-Signal (REQ2) aktiviert, um den Zugriff zwischen der zweiten CPU (2) und dem Speicher (4) zu ermöglichen.

2. Verarbeitungszeitzuordnungssystem nach Anspruch 1, **dadurch gekennzeichnet**, daß eine dritte CPU (3) mit dem Speicher (4) verbunden ist und ein drittes Zugriffsanforderungs-Signal (REQ3) erzeugt, wenn ein Zugriff zu dem Speicher (4) von der dritten CPU (3) gewünscht wird, wobei die zweite CPU (2) ein Unterdrückungssignal (PRHBT) für eine vorgegebene Zeit (Tx) erzeugt, die länger ist als jeder Vorgang zwischen der ersten CPU (1) und dem Speicher (4) und zwischen der dritten CPU (3) und dem Speicher (4), und daß die Zugriffssteuerungseinrichtung (8) zusätzlich das dritte Zugriffsanforderungs-Signal (REQ3) empfängt, um die Zeitzuordnung des Zugriffs zwischen der Anzahl von CPUs (1, 2, 3) und dem Speicher (4) in einem modifizierten First-in/First-out-Schema zu steuern, so daß während der Erzeugung des Unterdrückungssignals (PRHBT) kein Zugriff zwischen der ersten CPU (1) und dem Speicher (4) und zwischen der dritten CPU (3) und dem Speicher (4) initiiert wird, und wenn das Unterdrückungssignal (PRHBT) endet, wird das zweite Zugriffsanforderungs-Signal (REQ2) aktiviert, um den Zugriff zwischen der zweiten CPU (2) und dem Speicher (4) zu ermöglichen.

3. Verarbeitungszeitzuordnungssystem nach Anspruch 2, bei dem die Zugriffssteuerungseinrichtung (8) eine Bus-Wechsel-Steuerung ist.

4. Verarbeitungszeitzuordnungsverfahren für die Anwendung in einem Gerät, welches mit einem Speicher (4) und einer Anzahl von CPUs (1, 2, 3) versehen ist, die zu dem Speicher zeitlich nacheinander zugreifen können, und das eine Zugriffssteuerungseinrichtung (8) zur Zuordnung einer Verarbeitungszeit zwischen einer ausgewählten CPU und dem Speicher (4) hat, **dadurch gekennzeichnet**, daß eine CPU einen Zugriffsvorrang zu dem Speicher hat und das Verarbeitungszeitzuordnungsverfahren folgende Verfahrensschritte umfaßt:
Erkennung (Schritt # 1), ob eine Zugriffsaufforderung von der CPU mit dem Zugriffsvorrang erzeugt ist oder nicht;
Erzeugung (Schritt # 2) eines Unterdrückungssignals (PRHBT), wenn die Zugriffsaufforderung von der CPU mit dem Zugriffsvorrang festgestellt wird;
Zählen (Schritt # 3) einer vorgegebenen Zeitdauer zur Erzeugung des Unterdrückungssignals (PRHBT);
Unterdrückung jeder Aktivierung eines Zugriffs zu dem Speicher durch irgendeine CPU während das Unterdrückungssignal (PRHBT) vorliegt; und
Veranlassung (Schritt # 4) eines Zugriffs zwischen der CPU mit dem Zugriffsvorrang und dem Speicher, wenn das Unterdrückungssignal (PRHBT) endet.

## Revendications

1. Système d'allocation de temps de traitement comportant :
une mémoire (4), l'accès à ladite mémoire (4) étant partagé par une pluralité d'unités centrales (UC) (1, 2, 3), dans lequel au moins une première UC (1) est connectée à ladite mémoire (4) et produit un premier signal de demande d'accès (REQ1) lorsqu'un accès à ladite mémoire (4) est requis par ladite première UC (1), et une deuxième UC (2) est connectée à ladite mémoire (4) et produit un deuxième signal de demande d'accès (REQ2) lorsqu'un accès à ladite mémoire (4) est requis par ladite deuxième UC (2), et
des moyens de commande d'accès (8) sont agencés pour recevoir lesdits premier et deuxième signaux de demande (REQ1, REQ2) de manière à commander l'allocation de temps dudit accès entre ladite pluralité d'UC (1, 2, 3) et ladite mémoire (4),
caractérisé en ce que ladite deuxième UC (2), avant de produire ledit deuxième signal de demande d'accès (REQ2), produit un signal d'interdiction (PRHBT) pendant un temps prédéterminé (Tx) qui est plus long que n'importe quel traitement entre ladite première UC (1) et ladite mémoire (4) et, ensuite, produit ledit deuxième signal de demande d'accès (REQ2), et lesdits moyens de commande d'accès (8) reçoivent de plus ledit signal d'interdiction (PRHBT) pour commander ledit accès entre ladite première UC (1) et ladite mémoire (4) et entre ladite deuxième UC (2) et ladite mémoire (4) selon un schéma modifié du type premier entré-premier sorti, de telle sorte que, pendant la production dudit signal d'interdiction (PRHBT), aucun accès entre ladite première UC (1) et ladite mémoire (4) n'est initié et, lorsque ledit signal d'interdiction (PRHBT) est terminé, ledit deuxième signal de demande (REQ2) est activé pour valider l'accès entre ladite deuxième UC (2) et ladite mémoire (4).

2. Système d'allocation de temps de traitement selon la revendication 1, caractérisé en ce qu'il comporte en outre :
une troisième UC (3), connectée à ladite mémoire (4) et produisant un troisième signal de demande d'accès (REQ3) lorsqu'un accès à ladite mémoire (4) est requis par ladite troisième UC (3), dans lequel
ladite deuxième UC (2) produit ledit signal d'interdiction (PRHBT) pendant un temps prédéterminé (Tx) qui est plus long que n'importe quel traitement entre ladite première UC (1) et ladite mémoire (4) et entre ladite troisième UC (3) et ladite mémoire (4), et
lesdits moyens de commande d'accès (8) reçoivent de plus ledit troisième signal de demande (REQ3) de manière à commander l'allocation de temps dudit accès entre ladite pluralité d'UC (1, 2, 3) et ladite mémoire (4) selon un schéma modifié du type premier entré-premier sorti, de telle sorte que, pendant la production dudit signal d'interdiction (PRHBT), aucun accès entre ladite première UC (1) et ladite mémoire (4) et entre ladite troisième UC (3) et ladite mémoire (4) n'est initié et, lorsque ledit signal d'interdiction (PRHBT) est terminé, ledit deuxième signal de demande (REQ2) est activé pour valider l'accès entre ladite deuxième UC (2) et ladite mémoire (4).

3. Système d'allocation de temps de traitement selon la revendication 2, dans lequel lesdits moyens de commande d'accès (8) sont une commande de changement de bus.

4. Procédé d'allocation de temps de traitement destiné à être utilisé dans un dispositif comportant une mémoire (4) et une pluralité d'unités centrales (UC) (1, 2, 3) qui peuvent accéder à ladite mémoire, une à la fois, et des moyens de commande d'accès (8) destinés à allouer un temps de traitement entre une UC sélectionnée et ladite mémoire (4), caractérisé en ce qu'une UC a un accès prioritaire à ladite mémoire et ledit procédé d'allocation de temps de traitement comporte les étapes consistant à :
détecter (étape 1) si oui ou non une demande d'accès est produite par ladite UC ayant l'accès prioritaire,
produire (étape 2) un signal d'interdiction (PRHBT) lorsque ladite demande d'accès provenant de ladite UC ayant l'accès prioritaire est détectée,
compter (étape 3) une période de temps prédéterminée pour produire ledit signal d'interdiction (PRHBT),
empêcher tout début d'accès à ladite mémoire par une UC quelconque pendant que ledit signal d'interdiction (PRHBT) est présent, et
effectuer (étape 4) un accès entre ladite UC ayant l'accès prioritaire et ladite mémoire lorsque ledit signal d'interdiction (PRHBT) est terminé.
